Europäisches Patentamt

European Patent Office

Office européen des brevets

(19)

(11) **EP 1 116 935 A2**

(12) **EUROPÄISCHE PATENTANMELDUNG**

(43) Veröffentlichungstag:
**18.07.2001 Patentblatt 2001/29**

(51) Int Cl.⁷: **G01D 5/16**

(21) Anmeldenummer: **00128061.9**

(22) Anmeldetag: **21.12.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **11.01.2000 DE 10000647**

(71) Anmelder: **ROBERT BOSCH GMBH**
**70442 Stuttgart (DE)**

(72) Erfinder: **Dukart, Anton**
**70839 Gerlingen (DE)**

(54) **Verfahren und Einrichtung zur Auswertung von Winkelsignalen**

(57)    Verfahren zur Auswertung von Winkelsignalen eines magnetoresistiven Sensors, insbesondere eines AMR-Sensors, mit folgenden Schritten:

-    Generierung wenigstens zweier trigonometrischer Signale $x_1$, $x_2$, $x_3$, $x_4$, welche einem zu bestimmen-den Winkel $\Phi$ zuordnenbar sind und in vorbestimmter Phasenbeziehung zueinander stehen,

-    Generierung wenigstens zweier Rechtecksignale $x_1$, $x_2$, $x_3$, $x_4$; $U_{d1}$, $U_{d2}$, $U_{d3}$, $U_{d4}$, $U_{d5}$, $U_{d6}$ auf der Grundlage der trigonometrischen Signale,

-    logische Verknüpfung der Rechtecksignale zur De-finierung von einen Gesamtwinkelbereich beschrei-benden Winkelinkrementen, und

-    eindeutige Zuordnung des zu bestimmenden Winkels zu einem dieser Winkelinkremente.

$\mathrm{Sin}(2_\alpha) = x_1$

$\mathrm{Sin}(2_{\alpha+22.5}) = x_2$

$\mathrm{Sin}(2_{\alpha+45}) = x_4$

$\mathrm{Sin}(2_{(\alpha+45)}) = x_3$

1a

1

1b

**FIG. 1**

EP 1 116 935 A2

**Beschreibung**

Die vorliegende Erfindung betrifft ein Verfahren und eine Einrichtung zur Auswertung von Winkelsignalen.

Für zahlreiche technische Anwendungen, beispielsweise elektronische Systeme in Kraftfahrzeugen, wird ein kleiner und kompakt bauender inkrementeller Winkelsensor benötigt. So wird beispielsweise für elektronisch kommutierte Motoren ein inkrementeller oder auch oft ein absoluter Winkel zur optimalen Einstellung von Phaseneinschalt- bzw. - ausschaltwinkeln oder zur Einstellung des Motors bezüglich vorbestimmter Winkel benötigt.

Bekannte kleinbauende Kommutierungs-Winkelsensoren basieren in der Regel auf Hallschaltern, die von einem magnetischen Impulsring angesteuert werden und so ein digitales Winkelinkrement zur Verfügung stellen. Bei Verwendung von zwei Sensoren, welche beispielsweise um 90° phasenverschoben sind, lassen sich Rechtecksignale ableiten, aus denen sowohl die Drehrichtung als auch eine bezüglich dem erwähnten Einzelsensor vierfache Auflösung ableiten läßt. Der Nachteil dieser Ausführung besteht darin, daß für jeden Signalkanal ein Sensor und eine Leitung benötigt wird und die absolute Genauigkeit stark vom Impulsring abhängt. Ferner ist darauf hinzuweisen, daß mechanische Positionstoleranzen zwischen einem verwendeten Magnet und dem Impulsring sich auf die Genauigkeit stark auswirken können.

Insbesondere bei unkritischen Umweltbedingungen werden ebenfalls inkrementelle optische Zweikanallösungen verwendet, welche 16 bis 18000 Inkremente pro Umdrehung liefern. Der Nachteil derartiger optischer Sensoren liegt in einer möglichen Verschmutzung (auch Betauung) der optischen Strecke. Ferner ist bei Verwendung von Leuchtdioden, insbesondere bei hohen Einsatztemperaturen, auf eine mit der Zeit auftretende Degradation hinzuweisen. Aus diesem Grunde finden derartige Sensoren im Bereich der Kraftfahrzeuge kaum Verwendung.

Ferner ist die Verwendung magnetoresistiver Elemente im Rahmen von Winkelsensoren bekannt. Beispielsweise liefern Winkelsensoren auf der Grundlage des AMR-Effektes (anisotropic magnetic resistence) Ausgangssignale, aus denen sich die Richtung eines außen angelegten Magnetfeldes bestimmen läßt. Ist der Winkel des Magnetfeldes relativ zum Sensor gleich $\alpha$, liefert der Sensor Ausgangssignale, die zu Sinus($2\alpha$) bzw. Cosinus($2\alpha$) proportional sind. In dieser Weise arbeitende AMR-Sensoren stellen, aufgrund der Periodizität der Sinus- und Cosinus-Signale, einen Eindeutigkeitsbereich von 180° zur Verfügung.

AMR-Sensoren eignen sich für analoge Winkelmessungen, da sie im wesentlichen nicht auf die Intensität des ansteuernden Feldes, sondern lediglich auf dessen Richtung reagieren. Im allgemeinen werden derartige Sensoren für präzise analoge Meßaufgaben eingesetzt. Hierbei wird in der Regel eine Auswerteelektronik verwendet, die auf der Bildung des Arcustangens auf der Grundlage der erhaltenen Sinus- und Cosinussignale beruht. Wird eine derartige Auswertung digital durchgeführt, nimmt sie bei hoher Auflösung (beispielsweise 10 Bit) eine nicht unwesentliche Zeit in Anspruch, und erweist sich somit für dynamische Anforderungen als zu teuer oder zu langsam.

Aus der DE-OS 197 30 806 ist schließlich eine Einrichtung zur Signalauswertung bei Inkrementalgebern bekannt. Hierbei kann es für bestimmte Anwendungen ausreichend sein, eine grobe inkrementale Winkelinformation zur Verfügung zu stellen, welche eine schnelle und eindeutige Zuordnung eines Winkels zu einem bestimmten Winkelintervall bzw. Winkelinkrement gewährleistet. Als typische Anwendung sei in diesem Zusammenhang auf elektrisch kommutierte Motoren hingewiesen.

Aufgabe der vorliegenden Erfindung ist eine möglichst einfache inkrementelle Winkelauswertung, welche ohne großen Schaltungs- bzw. Rechenaufwand realisierbar ist.

Diese Aufgabe wird gelöst durch ein Verfahren mit den Merkmalen des Patentanspruchs 1 sowie eine Einrichtung mit den Merkmalen des Patentanspruchs 7.

Erfindungsgemäß ist eine äußerst kostengünstige, sehr schnelle und einfache Auswerteelektronik zur Bereitstellung einerseits einer groben, andererseits aber auch einer beliebig feinen inkrementellen Winkelinformation zur Verfügung gestellt. Hierbei erfolgt ein Einsatz von magnetoresistiven Winkelsensoren erstmals im Zusammenhang mit derartigen inkrementellen Winkelauswertungen.

Vorteilhafte Ausgestaltungen des erfindungsgemäßen Verfahrens bzw. der erfindungsgemäßen Einrichtung sind Gegenstand der Unteransprüche.

Gemäß einer bevorzugten Ausgestaltung des erfindungsgemäßen Verfahrens werden die eingesetzten Rechtecksignale durch Nullspannungskomparation der trigonometrischen Signale und/oder durch Komparation jeweils zweier trigonometrischer Signale generiert. Mit dieser Maßnahme sind in günstiger Weise auswertbare Rechtecksignale auf der Grundlage trigonometrischer Signale in einfacher Weise generierbar.

Zweckmäßigerweise werden wenigstens vier Rechtecksignale generiert, wobei durch mehrfache logische Verknüpfung dieser Signale wenigstens drei Verknüpfungssignale generiert werden, und durch logische Verknüpfung wenigstens zweier Verknüpfungssignale wenigstens ein weiteres Verknüpfungssignal generiert wird.

Mit einer derartigen logischen Verknüpfungsfolge ist beispielsweise ein Winkelbereich von 90° oder 180° in Inkremente von 22,5° aufteilbar, wobei ein zu bestimmender Winkel einem dieser Inkremente eindeutig zuordnenbar ist.

Die mit dieser Verknüpfung erzielbare Auflösung beträgt also 22,5°.

Zweckmäßigerweise werden als logische Verknüpfungen wenigstens teilweise EXOR-Verknüpfungen verwendet. Es erweist sich, daß derartige EXOR-Verknüpfungen eine besonders einfache und schnelle Signalauswertung zulassen. EXOR-Gatter zur Durchführung derartiger Verknüpfungen sind in einfacher und preiswerter Weise erhältlich.

Es ist ebenfalls bevorzugt, auf der Grundlage der Rechtecksignale als logische Verknüpfung eine Stufencodierung durchzuführen. Durch diese Maßnahme kann insbesondere bei hohen Auflösungen die Anzahl der notwendigen Datenleitungen reduziert werden.

Die Erfindung wird nun anhand der beigefügten Zeichnung weiter erläutert. In dieser zeigt

Figur 1 schematisch eine Sensorbeschaltung zum Erhalt von vier einem Winkel zuordnenbaren trigonometrischen Funktionen, welche zueinander in fester Phasenbeziehung stehen,

Figur 2 ein Schaltbild einer ersten bevorzugten Ausführungsform der erfindungsgemäßen Einrichtung,

Figur 3 die gemäß der Einrichtung der Figur 2 auftretenden Signalverläufe,

Figur 4 eine weitere Sensorbeschaltung zum Erhalt von drei trigonometrischen Funktionen, welche zueinander in fester Phasenbeziehung stehen,

Figur 5 die bei Einsatz einer Einrichtung gemäß Figur 4 auftretenden Signalverläufe sowie aus diesen ableitbare Rechtecksignale,

Figur 6 eine der Einrichtung der Figur 4 zugeordnete Auswerteelektronik, und

Figur 7 ein Schaubild zur Erläuterung einer mit der in Figur 6 dargestellten Auswerteelektronik realisierbaren Stufencodierung.

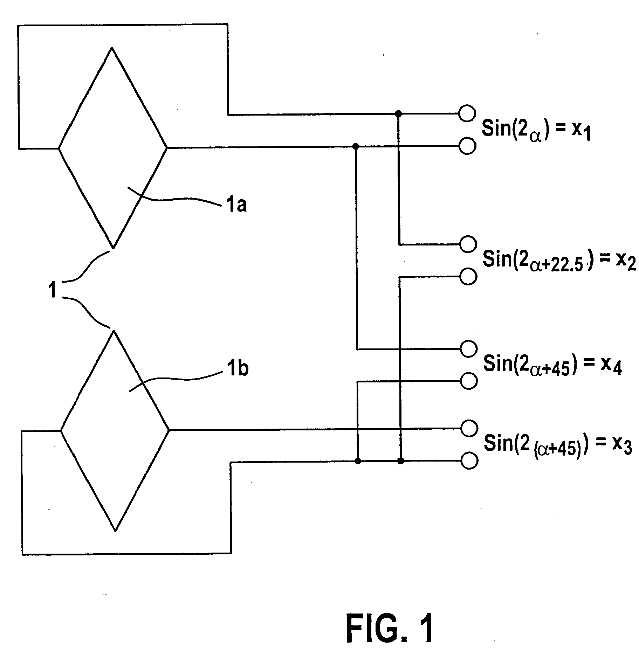

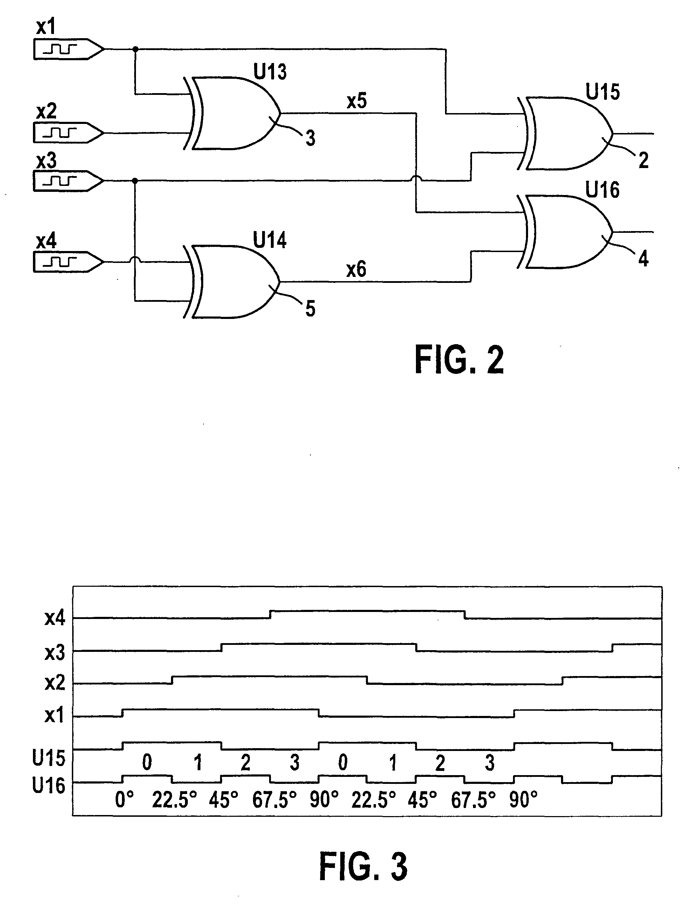

In Figur 1 ist schematisch ein aus zwei Vollbrücken la, 1b bestehender AMR-Sensor dargestellt. Der AMR-Sensor 1 gibt entsprechend einem Winkel relativ zu einem nicht dargestellten äußeren Magnetfeld trigonometrische Sensorsignale in analoger Form aus. In Figur 1 erkennt man, daß jede der Brücken la, 1b ein analoges Sinus- bzw. Cosinussignal $x_1$, $x_2$, $x_3$, $x_4$ liefert. Man erkennt, daß man vier um 22,5° phasenverschobene trigonometrische Signale erhält. Mittels den Brücken nachgeschalteten Nullspannungs-Komparatoren erhält man für jede Brücke zwei um 90° phasenverschobene TTL-Rechtecksignale xl, x2, x3, x4, deren Signalverläufe in Figur 3 dargestellt sind. Es sei angemerkt, daß die Nullspannungs-Komparatoren in den Figuren 1 und 2 nicht dargestellt sind. Es seien zunächst die Rechtecksignale xl, x3 betrachtet. Wie in Figur 2 zu erkennen, werden diese Rechtecksignale als Eingänge auf ein EXOR-Gatter 2 gegeben, welches ein Ausgangssignal bzw. Verknüpfungssignal U15 ausgibt. Man erkennt in Figur 3, daß es sich bei dem Signal U15 um ein inkrementales Rechtecksignal handelt, dessen Auflösung jedoch nur 45° beträgt, was für zahlreiche Anwendungen eines inkrementalen Kommutierungssensors zu niedrig sein kann.

Zur Verdoppelung der Inkremente, d. h. zur Schaffung einer genaueren Auflösung, wird nun wie folgt vorgegangen:

Die vier aus den trigonometrischen Signalen $x_1$, $x_2$, $x_3$ und $x_4$ generierten Rechtecksignale x1, x2, x3 und x4 werden zunächst paarweise auf EXOR-Gatter 3 und 5 gegeben. Die Ausgangssignale dieser EXOR-Gatter, welche mit x5, x6 bezeichnet sind, werden nun als Eingänge auf ein weiteres EXOR-Gatter 4 gegeben, dessen Ausgangssignal U16 ebenfalls der Figur 3 zu entnehmen ist. Insgesamt erhält man gemäß der Schaltung der Figur 2 die EXOR-Verknüpfungen x1 x2, x1 x3, x3 x4 und x5 x6.

Das Ausgangssignal U16 liefert ein inkrementales Winkelsignal, welches alle 22,5° den Pegel wechselt. Das bereits behandelte Signal U15 ist derart gebildet, daß eine absolute Codierung durch Betrachtung lediglich der Signale U15, U16 innerhalb eines Winkelbereiches von 90° entsteht. Bezieht man in eine derartige Betrachtung weiterhin ferner beispielsweise das Rechtecksignal x1 ein, ergibt sich eine eindeutige Codierung über einen Winkelbereich von 180°.

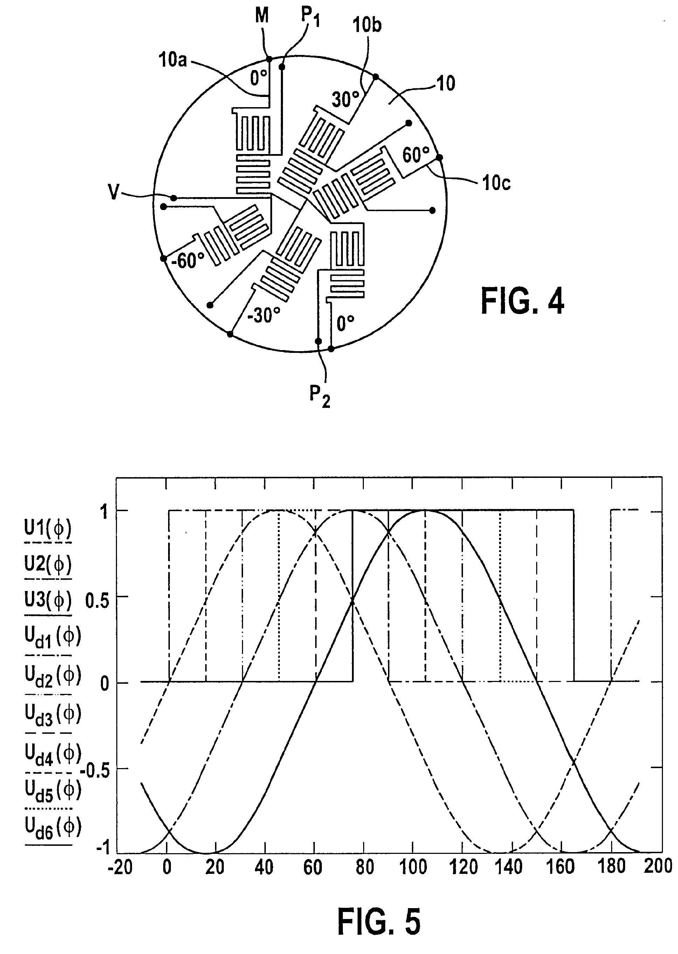

Durch die Schaltung gemäß Figur 2 läßt sich also ein absoluter Winkel mit einer Auflösung von 22,5° bestimmen. Anhand der Figuren 4 bis 6 wird nun beschrieben, wie sich diese Auflösung weiter verbessern läßt.

In Figur 4 erkennt man, daß anstelle der zwei Vollbrücken, wie sie in Figur 1 dargestellt sind, zu Brücken verschaltete Halbbrücken 10a, 10b, 10c vorgesehen sind, welche entsprechend einer gewünschten Auflösung des insgesamt mit 10 bezeichneten Gesamtsensors phasenverschoben angeordnet sind. Diese Brücken liegen in der Darstellung der Figur 4 jeweils außen an Masse M, und innen an der Versorgungsspannung V an. Die jeweiligen Mäander der AMR-Sensorelemente, welche die Brücken 10a, 10b, 10c bilden, wirken als winkelabhängige Spannungsteiler. Dies sei am Beispiel der 0°-Brücke 10a erläutert. Das trigonometrische Signal wird durch Abgreifen einer Spannung zwischen den Punkten $P_1$, $P_2$ erhalten. Diese Punkte liegen jeweils zwischen den senkrecht zueinander verlaufenden Mäanderbereichen. Bei Veränderung des Winkels eines äußeren Magnetfeldes verändern sich die Widerstände dieser senkrecht zueinander verlaufenden Mäanderbereiche gegenläufig, so daß beispielsweise die Spannung am Punkt $P_1$ steigt, während die Spannung am Punkt $P_2$ sinkt. Somit erhält man ein vom Winkel des äußeren Magnetfeldes abhängiges analoges trigonometrisches Signal. Insgesamt erhält man beispielsweise die folgenden trigonometrischen Funktionen:

$$U1(\Phi) = \frac{A}{2} \sin\left(2 \cdot \Phi \cdot \frac{\pi}{180}\right)$$

$$U2(\Phi) = \frac{A}{2} \cdot \sin\left[2 \cdot (\Phi - 30) \cdot \frac{\pi}{180}\right]$$

$$U3(\Phi) = \frac{A}{2} \cdot \sin\left[2 \cdot (\Phi - 60) \cdot \frac{\pi}{180}\right]$$

Hierbei stellt A die Amplitude des Sensorsignals, und $\Phi$ den zu bestimmenden Winkel dar.

Auf der Grundlage dieser drei analogen trigonometrischen Signale lassen sich die folgenden Rechtecksignale generieren:

$$U_{d1}(\Phi) = |1 \text{ if } U1(\Phi) > 0$$
$$| 0 \text{ andernfalls}$$

$$U_{d2}(\Phi) = |1 \text{ if } U2(\Phi) > 0$$
$$| 0 \text{ andernfalls}$$

$$U_{d3}(\Phi) = |1 \text{ if } U3(\Phi) > 0$$
$$| 0 \text{ andernfalls}$$

$$U_{d4}(\Phi) = |1 \text{ if } U1(\Phi) > -U2(\Phi)$$
$$| 0 \text{ andernfalls}$$

$$U_{d5}(\Phi) = |1 \text{ if } U3(\Phi) > -U2(\Phi)$$
$$| 0 \text{ andernfals}$$

$$U_{d6}(\Phi) = |1 \text{ if } U3(\Phi) > U1(\Phi)$$
$$| 0 \text{ andernfalls}$$

Die trigonometrischen Funktionen U1 ($\Phi$), U2 ($\Phi$) und U3 ($\Phi$) sowie die hieraus generierten Rechteckfunktionen sind in Figur 5 dargestellt. Es sei darauf hingewiesen, daß die Rechteckfunktionen $U_{d1}$, $U_{d2}$ und $U_{d3}$ durch Nullspannungskomparation generiert sind, während die Funktionen $U_{d4}$, $U_{d5}$ und $U_{d6}$ durch relative Komparationen je zweier analoger Funktionen generiert sind. Auf der Grundlage der Rechtecksignale $U_{d1}$ bis $U_{d6}$ läßt sich beispielsweise, unter entsprechendem Einsatz von EXOR-Gattern, wie sie unter Bezugnahme auf Figur 2 beschrieben wurde, eine 15°-Auflösung beispielsweise eines 90°-Meßbereichs erzielen.

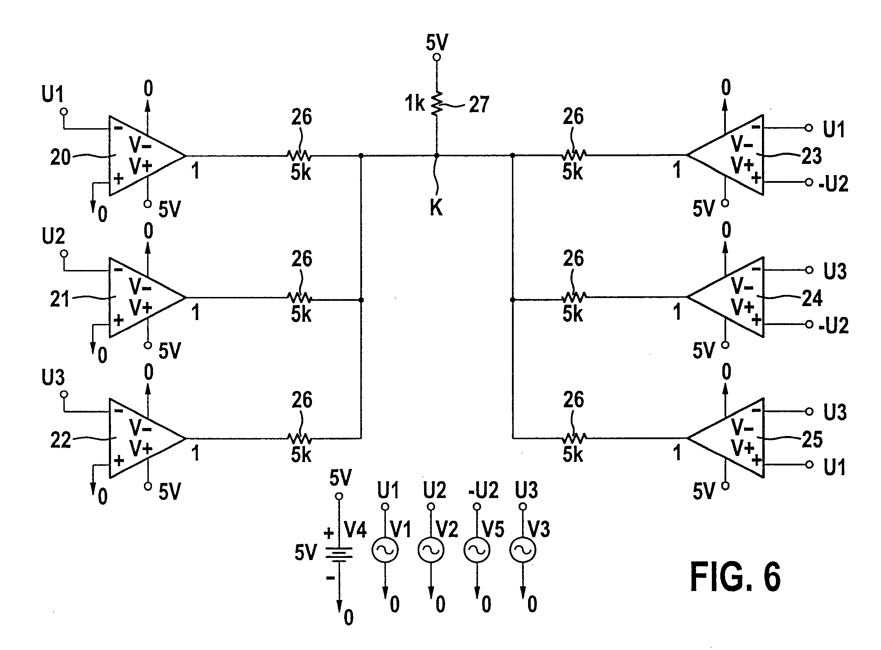

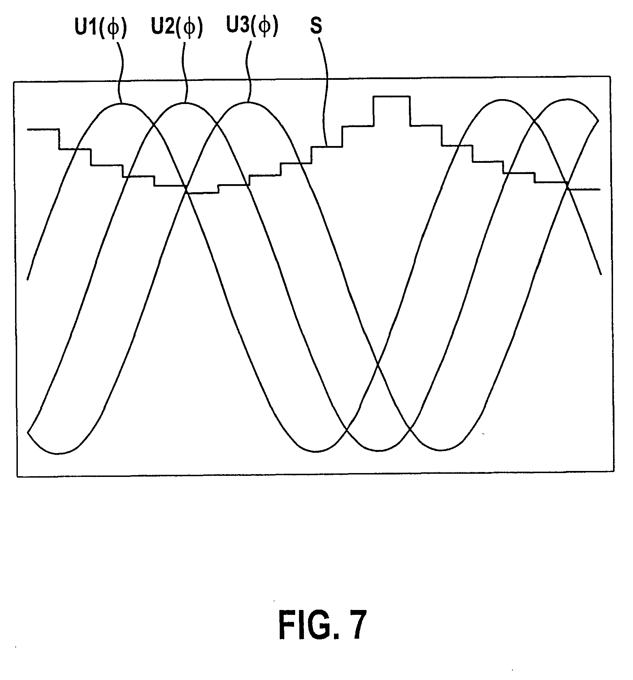

Für die Übertragung der hierbei entstehenden inkrementalen Signale benötigt man (15°-Auflösung im 90°-Meßbereich) bereits drei Signalleitungen. Es erweist sich daher insbesondere bei noch höheren Auflösungen als zweckmäßig, eine Stufencodierung als logische Verknüpfung der Rechtecksignale zur weiteren Vereinfachung der Auswerteelektronik und zur Reduktion auf nur eine einzige Datenleitung zu verwenden. Zu diesem Zweck ist die in Figur 6 dargestellte Schaltung vorteilhaft verwendbar. Diese Schaltung stellt einen in Stufen einstellbaren veränderlichen Spannungsteiler dar, dessen Ausgangsspannung, welche beispielsweise am Punkt K abgreifbar ist, von den Eingangsspannungen der jeweiligen als Komparatoren geschalteten Operationsverstärker 20 bis 25 abhängt. Wie dargestellt, dienen die Operationsverstärker zur Generierung der Funktionen $U_{d1}$ bis $U_{d6}$. Der Spannungspegel am Punkt K hängt insgesamt ab von einer Versorgungsspannung, welche beispielsweise 5 Volt betragen kann, und welche über einen Widerstand R1 an dem Punkt K anliegt, sowie von den Ausgangsspannungen der Operationsverstärker 20 bis 25, welche beispielsweise entweder 0 Volt oder 5 Volt betragen und über als Spannungsteiler dienende Vorwiderstände 26 an dem Punkt K anliegen. Bei den genannten Spannungswerten kann der Widerstand 27 beispielsweise ein KΩ betragen. Die dem Operationsverstärker nachgeschalteten Widerstände 26 können beispielsweise als 5 KΩ-Widerstände ausgebildet sein. Es ergeben sich bei Verwendung dieser Auswerteelektronik insgesamt stufencodierte Signalverläufe S, wie sie in Figur 7 schematisch dargestellt sind. Auch hier ist über einen bestimmten Winkelbereich eine gleichmäßige inkrementale Auflösung zur Verfügung gestellt.

Es sei noch einmal darauf hingewiesen, daß mit der vorliegenden Erfindung ein kleinbauendes, statisches Meßprinzip zur Verfügung gestellt ist. Es erweist sich als sehr kostengünstig realisierbar, da nur ein AMR-Chip und beispielsweise handelsübliche kostengünstige Gatter, insbesondere EXOR-Gatter, verwendbar sind. Der Winkel kann sowohl inkremental wie auch absolut codiert berührungslos abgegriffen werden. Das dargestellte Verfahren bzw. die hierzu verwendete Einrichtung weist eine gute Nullpunkts- und Temperaturstabilität auf. Ferner ist eine weitgehende mechanische Toleranzunabhängigkeit von Abstand und Position eines den zu bestimmenden Winkel definierenden Permanentmagneten zur Verfügung gestellt. Die beschriebene Auswerteschaltung ist einfach zu realisieren und erweist sich in der Praxis als robust und zuverlässig.

**Patentansprüche**

1. Verfahren zur Auswertung von Winkelsignalen eines magnetoresistiven Sensors, insbesondere eines AMR-Sensors, mit folgenden Schritten:

   - Generierung wenigstens zweier trigonometrischer Signale ($x_1$, $x_2$, $X_3$, $x_4$), welche einem zu bestimmenden Winkel Φ zuordnenbar sind und in vorbestimmter Phasenbeziehung zueinander stehen,
   - Generierung wenigstens zweier Rechtecksignale (x1, x2, x3, x4; $U_{d1}$, $U_{d2}$, $U_{d3}$, $U_{d4}$, $U_{d5}$, $U_{d6)}$ auf der Grundlage der trigonometrischen Signale,
   - logische Verknüpfung der Rechtecksignale zur Definierung von einen Gesamtwinkelbereich beschreibenden Winkelinkrementen, und
   - eindeutige Zuordnung des zu bestimmenden Winkels zu einem dieser Winkelinkremente.

2. Verfahren nach Anspruch 1, dadurch gekennzeichnet, daß die Rechteckfunktionen durch Nullspannungs-Komparation der trigonometrischen Signale oder durch Komparation jeweils zweier trigonometrischer Signale generiert werden.

3. Verfahren nach einem der Ansprüche 1 oder 2, dadurch gekennzeichnet, daß vier Rechtecksignale auf der Grundlage von vier trigonometrischen Signalen generiert werden, wobei durch mehrfache logische Verknüpfung dieser Rechtecksignale wenigstens drei Verknüpfungssignale (x5, x6, U15) generiert werden und durch weitere Verknüpfung der Verknüpfungssignale wenigstens ein weiteres Verknüpfungssignal generiert wird.

4. Verfahren nach einem der Ansprüche 1 oder 2, dadurch gekennzeichnet, daß vier oder sechs Rechtecksignale auf der Grundlage von drei trigonometrischen Signalen erzeugt werden.

5. Verfahren nach einem der vorstehenden Ansprüche, dadurch gekennzeichnet, daß als logische Verknüpfungen wenigstens teilweise EXOR-Verknüpfungen verwendet werden.

6. Verfahren nach einem der vorstehenden Ansprüche 1 bis 4, dadurch gekennzeichnet, daß die logische Verknüpfung eine Stufencodierung der Rechtecksignale umfaßt.

7. Einrichtung zur Auswertung von Winkelsignalen eines magnetoresistiven Sensors, insbesondere eines AMR-Sensors, mit

- Mitteln (la, 1b; 10a, 10b, 10c) zur Generierung wenigstens zweier trigonometrischer Signale, welche einem zu bestimmenden Winkel Φ zuordnenbar sind und in vorbestimmter Phasenbeziehung zueinander stehen,
- Mitteln (20 - 25) zur Generierung wenigstens zweier Rechtecksignale auf der Grundlage der trigonometrischen Signale,
- Mitteln (2, 3, 4, 5) zur logischen Verknüpfung der Rechtecksignale zur Definierung von einen Gesamtwinkelbereich beschreibenden bzw. überdeckenden Winkelinkrementen, und
- Mitteln zur eindeutigen Zuordnung des zu bestimmenden Winkels zu einem dieser Winkelinkremente.

8.  Einrichtung nach Anspruch 7, gekennzeichnet durch Komparatoren (20 - 25) zur Nullspannungs-Komparation und/ oder relativen Komparation der jeweiligen trigonometrischen Signale und Bereitstellung jeweiliger Rechtecksignale.

9.  Einrichtung nach einem der Ansprüche 7 oder 8, gekennzeichnet durch EXOR-Gatter (2, 3, 4, 5) zur Durchführung der logischen Verknüpfung der Rechtecksignale.

10. Einrichtung nach einem der Ansprüche 7 oder 8, gekennzeichnet durch Mittel (20 - 25, 26, 27) zur Durchführung einer Stufencodierung der Rechtecksignale.

$Sin(2_\alpha) = x_1$

$Sin(2_{\alpha+22.5}) = x_2$

$Sin(2_{\alpha+45}) = x_4$

$Sin(2_{(\alpha+45)}) = x_3$

1a

1

1b

**FIG. 1**

**FIG. 2**

**FIG. 3**

FIG. 4

$U1(\phi)$
$U2(\phi)$
$U3(\phi)$
$U_{d1}(\phi)$
$U_{d2}(\phi)$
$U_{d3}(\phi)$
$U_{d4}(\phi)$
$U_{d5}(\phi)$
$U_{d6}(\phi)$

FIG. 5

FIG. 6

EP 1 116 935 A2

FIG. 7